# EUROPEAN PATENT APPLICATION

(11) **EP 4 752 355 A1**
(43) Date of publication of application: **03.06.2026**
(21) Application number: 25200954.3
(22) Date of filing: 09.09.2025
(51) Int. Cl.: F02M 43/04, F02D 19/06, F02M 55/00, F02M 61/18, F02M 61/20

(54) **FUEL INJECTOR, NOZZLE TIP AND VALVE NEEDLE FOR A FUEL INJECTOR, FUEL INJECTION SYSTEM AND LARGE COMBUSTION ENGINE**

(30) Priority: 23.01.2025 EP 25153643
(71) Applicant: WinGD Ltd., 8400 Winterthur (CH)
(72) Inventor: Balta, Danijel, 8352 Elsau (CH); Strödecke, Daniel, 8400 Winterthur (CH); Sichler, Martin, 8311 Brütten (CH); Grote, Norbert, 8404 Winterthur (CH)
(74) Representative: Hepp Wenger Ryffel AG

(57) **Abstract**

The invention discloses a fuel injector (1) for injecting a fuel into a combustion chamber (211) of a large combustion engine (200). The fuel injector (1) comprises an injector body (3) with a fuel supply line (16) and a fuel supply chamber (6), a nozzle tip (10) having a spray hole (11), and a valve needle (13) biased by a spring (14) towards a closed position against a valve seat (15). The valve needle (13) is configured to open and close a fluid connection between the fuel supply chamber (6) and the spray hole (11), wherein the spring (14) is arranged in a spring chamber (50). The fuel supply line (16) is fluidly connected or connectable to the spring chamber (50) and to the fuel supply chamber (6). The invention further discloses a nozzle tip (10) for a fuel injector (1), a valve needle (13) for a fuel injector (1), a fuel injection system (100) and a large combustion engine (200).

## Description

### Technical Field

The invention relates to a fuel injector for injecting fuel into a combustion chamber, a nozzle tip for a fuel injector, a valve needle for a fuel injector, a fuel injection system, and a large combustion engine.

CN 116 025 493 A discloses a dual-fuel injector for diesel and an alternative fuel such as methanol or ammonia. The injector comprises a spring-loaded needle valve which can close a spray hole. The alternative fuel is compressed in a pressure chamber and injected into a combustion chamber as the needle valve opens. Parts of the alternative fuel can thereby remain in the injector. Due to the occurring pressure drop, this fuel can evaporate and thus be lost or must be reconditioned at great expense.

CN 118 959 202 A discloses a dual-fuel injector for diesel and ammonia and/or hydrogen. The injector comprises a nozzle with multiple spray holes. Such an injector can suffer from cavitation.

It is an objective of the present invention to at least in part overcome the drawbacks of the prior art solutions.

### Disclosure of the Invention

This objective is achieved by a fuel injector, a nozzle tip for a fuel injector, a valve needle for a fuel injector, a fuel injection system, and a large combustion engine according to the independent claims.

Large engines, which can be configured as two-stroke or four-stroke engines, e.g. as longitudinally scavenged two-stroke large engines or two-stroke cross-head engines, are often used as drive units for ships, particularly large ships and vessels for the transport of goods, or in stationary operations such as driving large generators for generating electrical energy. The engines usually run for considerable periods in continuous operation, which places high demands on operational safety and availability. As a consequence, particularly long maintenance intervals, low wear, and economical handling of the operating materials are central criteria for the operator. Large engines typically have cylinders with an inner diameter (bore) of at least 200 mm. Nowadays, large engines with a bore of up to 980 mm or even more are used. Within the framework of this application, the term "large engine" designates an internal combustion engine with a bore of the cylinder(s) that is at least 200 mm and preferably at least 300 mm. Engine speed is preferably below 800 RPM, especially for four-stroke engines, and more preferably below 200 RPM for two-stroke engines, which indicates the designation of low-speed engines.

Large engines are classically configured as large diesel engines, which are operated with heavy fuel oil. The engine can be a diesel or a gas engine, a dual-fuel or a multi-fuel engine. Under the aspects of economic and efficient operation, compliance with exhaust-gas limit values, sustainability, reduction of CO₂ emissions, and the availability of resources, alternatives to heavy fuel oil are now also being sought for large engines. In this respect, both liquid fuels, i.e**.** fuels that are introduced into the combustion chamber in the liquid state, and gaseous fuels, i.e**.** fuels that are introduced into the combustion chamber in the gaseous state, are used.

Examples of liquid fuels as known alternatives to heavy fuel oil are other heavy hydrocarbons, which are particularly left over as residues from oil refining; alcohols, in particular methanol or ethanol; ammonia; gasoline; diesel; or also emulsions or suspensions such as slurries. Biological fuels, such as oil made from algae or seaweed, HVO (hydro-treated vegetable oil), and FAME (fatty acid methyl ester) based fuels are also possible. For example, it is known to use emulsions known as MSAR (Multiphase Superfine Atomized Residue) as fuel. As gaseous fuels, natural gases such as LNG (liquefied natural gas), liquefied gases such as LPG (liquefied petroleum gas), natural gas (NG), petrol gas (PG), ethane, or hydrogen are known. Further possible fuels comprise LBG (liquefied biogas), hydrogen, ammonia, and synthetic fuels from CO₂ (e.g., made by Power-To-Gas or Power-To-Liquid processes).

In particular, large engines are also known which can be operated with at least two or even more different fuels, whereby the engine is operated either with one fuel or with the other fuel depending on the operating situation or environment. It is also known to concurrently inject the two different fuels into the combustion chamber of the cylinder.

Large engines that can be operated with two or more different fuels are referred to as dual-fuel or multi-fuel large engines. Depending on the fuels, these engines may be operated in a liquid mode, in which a liquid fuel is introduced into the cylinder for combustion, and/or in a gas mode, in which a gas is introduced into the cylinder as fuel.

Large engines, which can be operated with at least two or even more different liquid or gaseous fuels, are often operated in different operating modes depending on the fuel currently in use. In the operating mode often referred to as diesel operation, the combustion of the fuel generally takes place according to the principle of compression ignition or self-ignition of the fuel. In the mode often referred to as Otto operation, combustion takes place by induced ignition. This induced ignition can take place, for example, by an electrical spark (e.g., with a spark plug) or by the self-ignition of a small injected amount of fuel (pilot fuel), which then causes the induced ignition of another fuel. The small amount of fuel intended for self-ignition is directly inserted into the combustion chamber or injected into a pre-chamber connected to the combustion chamber. Forced ignition can thus be achieved by use of a pre-chamber, a spark plug, and/or a pilot fuel. The process of induced ignition by self-ignition of a small amount of a liquid or another self-igniting fuel is sometimes referred to as pilot injection. Furthermore, mixed forms using both Otto and diesel operation are also known.

In particular, in view of attempts to reduce greenhouse gas emissions, the reduction of CO₂ production, and sustainability goals, a reduction in the use of fossil fuels is strived for. Thus, alternatives are investigated to at least reduce or even completely avoid the use of fossil fuels in large engines. Even if this is still a long way off, a partial replacement of fossil fuels by renewable fuels is considered a significant success. One alternative to fossil fuel is, for example, methanol or ammonia. However, such renewable fuels can cause corrosion problems in the fuel distribution and injection system, in particular during standstill of the engine, when the stagnant methanol can corrosively attack the pipes or other components of the fuel injection system. Furthermore, there is the risk that these fuels escape from the engine, e.g., as vapor, into the space which is accessible to engine maintenance or operating personnel. This constitutes a health hazard requiring comprehensive mitigation measures.

The escaping of gaseous fuel into the atmosphere are usually referred to as fuel slip or fugitive emissions. When methanol or ammonia is used as a fuel in a large engine, most of the methanol or ammonia is consumed in the combustion process. However, some of the fuel remains unburned and may escape into the atmosphere, e.g., by passing through the exhaust gas system of the large engine (fuel slip). All upstream losses are summarized as fugitive emissions. Methanol or ammonia is hazardous for the environment as well as for humans and animals. Therefore, great efforts are made to reduce the fuel slip occurring in large engines, such as those used for ship propulsion.

A first aspect of the invention concerns a fuel injector for injecting a fuel, in particular a low-flashpoint fuel such as methanol, ammonia, or LPG, into a combustion chamber of a large combustion engine. The fuel injector comprises an injector body with a fuel supply line and a fuel supply chamber, a nozzle tip having a spray hole, through which the fuel is injectable into the combustion chamber, and a valve needle biased by a spring towards a closed position against a valve seat. The valve needle is configured to open and close a fluid connection between the fuel supply chamber and the spray hole. The spring is arranged in a spring chamber. The fuel supply line is fluidly connected or connectable to the spring chamber and to the fuel supply chamber. In particular such that the fuel is guidable from the fuel supply line through the spring chamber to the fuel supply chamber. Thus, fuel that has leaked into the spring chamber can be reused.

If the valve needle is in an open position, fuel can be guided from the fuel supply chamber to the spray hole. Fuel can remain in the nozzle tip during an injection into a combustion chamber. In particular, fuel can enter the spring chamber along gap around the valve needle. Since the spring chamber is fluidically connected or connectable to the fuel supply line and the fuel supply chamber, this fuel can re-enter the fuel supply chamber and thus be reused in a next injection cycle.

In the context of the invention, the term fuel supply chamber refers to a volume configured for supplying fuel.

The fuel supply chamber may be a pressure chamber configured to pressurize the fuel from a fuel supply pressure, advantageously between 5 bar and 100 bar, to a fuel injection pressure, advantageously between 300 bar and 800 bar.

This enables compact fuel preparation. Pressurization in the pressure chamber can be achieved by means of a piston, in particular a hydraulically driven piston. The piston can be part of the fuel injector. Preferably such a piston is moveable within the pressure chamber.

A fuel injector comprising a pressure chamber and a hydraulically driven piston may further comprise an actuating chamber into which an actuating fluid can be supplied.

The hydraulically driven piston can have a first side with a first cross-sectional area facing the actuation chamber and a second side with a second cross-sectional area facing the pressure chamber. A supply of actuating fluid to the actuation chamber can move the hydraulically driven piston to pressurize the fuel in the pressure chamber.

In the case where the fuel supply chamber is a pressure chamber, it is particularly advantageous that the fuel supply line is fluidly connected or connectable to the spring chamber and to the fuel supply chamber.

A valve, preferably a non-return valve, can be arranged between the spring chamber and the fuel supply chamber.

A fluidic connection between the spring chamber and the fuel supply chamber can be controllable by means of a valve. A preferred non-return valve allows fuel to pass the valve in only one direction. A non-return valve is simple, low-maintenance, and robust.

In one embodiment, the valve can be a controlled valve, in particular an electrically controlled valve, especially a magnetic valve. Such a valve can be precisely controllable.

The valve can be configured such that a fuel flow can be established from the spring chamber to the fuel supply chamber, and that a fuel flow can be blocked from the fuel supply chamber to the spring chamber.

This can prevent fuel from flowing from the supply chamber into the spring chamber. In particular, if the supply chamber is a pressure chamber, this can prevent fuel from being pushed back into the supply line, e.g**.** during a compression step.

The spring chamber can be fluidly connected or connectable to the fuel supply chamber by means of a connection line. The connection line can have a smaller flow cross section than a maximum flow cross section of the spring chamber. The connection line can have the same flow cross-section as the fuel supply line within a range of ±10%.

Such a connection line allows the spring chamber and the fuel supply chamber to be spatially separated, which enables flexible arrangement of the spring chamber and the fuel supply chamber in the fuel injector.

A connection line with a flow cross-section approximately equal to that of the fuel supply line can ensure a uniform flow, in particular a uniform average flow speed of the fuel, when filling the fuel supply chamber.

The valve, in particular the non-return valve, may be located in or on the connection line.

The fuel supply line can comprise a first end and a second end, wherein the first end is fluidly connectable to a fuel supply and wherein the second end is fluidly connected to the spring chamber.

Preferably, the spring chamber comprises a cylindrical shape and the second end of the fuel supply line is located on the outer surface of the cylindrically shaped spring chamber. Such a fuel supply line is particularly easy to manufacture.

In one embodiment, the second end of the fuel supply line can be located on a base surface of a cylindrically shaped spring chamber.

In one embodiment, the second end of the fuel supply line may be connected to the connection line, with the second end of the fuel supply line being located between the spring chamber and the valve.

According to a second aspect of the invention, a nozzle tip for a fuel injector, preferably for a fuel injector as described above with regard to the first aspect of the invention, for injecting a fuel, in particular a low flashpoint fuel such as methanol, ammonia, or LPG, into a combustion chamber of a large combustion engine is disclosed. The nozzle tip comprises a spray hole through which the fuel is injectable into the combustion chamber. The spray hole has along its axis a non-cylindrical shape and/or wherein at least one aperture of the spray hole is non-circular. This helps, by means of an improved velocity and/or pressure distribution inside the spray hole, to prevent unwanted cavitation of the fuel during injection.

The nozzle tip can comprise one or more spray holes. In one embodiment in which the nozzle tip comprises several spray holes, the spray holes comprise preferably the same or at least similar dimensions.

The nozzle tip is preferably a sac nozzle. Such a nozzle tip is advantageous because, compared to a valve-closed-orifice nozzle, an improved lifespan of the nozzle tip can be achieved and only one large area needs to be sealed.

In the context of this invention, cylindrical is understood to refer to a geometric shape that essentially corresponds to that of a circular cylinder in the sense of Euclidean geometry. In particular, cylindrical is not understood to have the generalized mathematical meaning.

At cylindrical spray holes, in particular at the inlet of such spray holes, local reduction in static pressure can occur, which can be lower than the vapor pressure of the fuel, thus increasing the probability of cavitation. Cavitation can damage the nozzle tip through hydro-erosive processes and/or influence the spray profile of the nozzle tip. A nozzle tip as disclosed can reduce the probability of cavitation.

The shape and/or size of the spray hole can influence the flow in the spray hole and thus influence the spray profile of the nozzle tip.

The spray hole can comprise along its axis at least one of a conical shape, a shape defined by a non-linear function, and a shape defined by a polynomial function. Thus, the shape of the spray hole can be optimized to prevent or at least improve unwanted cavitation of the fuel.

The spray hole may comprise an inlet opening and an outlet opening, whereby fuel can leave the nozzle tip through the outlet opening. Preferably, the outlet opening has a smaller area than the inlet opening. This further reduces the probability of cavitation occurring.

A spray hole with a rounded inlet opening is particularly advantageous, as this can further reduce the probability of cavitation occurring. By the term "rounded", it is meant that sharp edges are avoided or at least reduced.

The spray hole may also comprise a conical shape along its axis only in the area of the inlet opening and then transition to a cylindrical shape toward the outlet opening.

The spray hole can comprise along its axis a conical shape with a half-angle θ between 0.5° and 20°, preferably between 3° and 10°, most preferably between 5° and 8°.

The half-angle corresponds to the angle between a surface line of the spray hole and its axis.

A conical shaped spray hole with such a half-angle reduces the probability of cavitation occurring. The half-angle of the conical shape can be constant or variable across the spray hole. A spray hole with a constant half-angle is particularly easy to manufacture. A spray hole with a variable half-angle allows for particularly flexible adjustment of the spray pattern.

According to a third aspect of the invention, a nozzle tip, preferably a nozzle tip as described above with regard to the second aspect of the invention, for a fuel injector, preferably for a fuel injector as described above with regard to the first aspect of the invention, for injecting a fuel, in particular a low flashpoint fuel such as methanol, ammonia, or LPG, into a combustion chamber of a large combustion engine is disclosed. The nozzle tip comprises a spray hole through which the fuel is injectable into the combustion chamber, a high-pressure fuel duct through which the fuel is guidable from the fuel injector to the spray hole, and a valve needle support for guiding a valve needle, and a valve seat. The nozzle tip further comprises a valve needle actuation chamber arranged in the valve needle support and fluidly connected or connectable to the high-pressure fuel duct. Thus, the valve needle can be moved from the closed position against the valve seat to its open position.

The valve needle support, which can guide a valve needle, is preferably cylindrical or at least partially cylindrically shaped.

When installed, the valve needle support can form a plain bearing with the needle shaft, whereby fuel can serve as a lubricant.

The valve needle actuation chamber according to the invention can allow the opening and/or closing behavior of an installed valve needle to be controlled and/or adjustable.

The needle actuation surface of a valve needle can be arranged in the valve needle actuation chamber, when mounted.

The valve needle actuation chamber is preferably cylindrically shaped and can be arranged at one end of the valve needle support, usually at an end of the valve needle support facing away from the valve seat. Preferably, a cylindrically shaped valve needle actuation chamber comprises a larger cross-sectional area than the cross-sectional area of the needle-carrying valve needle support.

An increase in the cross-sectional area of the valve needle actuation chamber, in conjunction with a corresponding valve needle and while maintaining the same fuel pressure, can enable a higher opening force on the valve needle.

Through the fluid connection to a high-pressure fuel duct, fuel can be fed into the valve needle actuation chamber, whereby a built-in valve needle can be lifted so that fuel can flow from the high-pressure fuel duct through the spray hole.

The valve needle actuation chamber is advantageously fluidly connected or connectable to the high-pressure fuel duct by means of a throttle line. Thus, the opening and closing behavior of the valve needle can be controlled more precisely.

The throttle line can reduce the filling speed of the valve needle actuation chamber with fuel. This allows the force exerted on a valve needle, in particular on the needle actuating surface of the valve needle, to be built up slowly. This allows a valve needle to be lifted from the valve seat of the nozzle tip in a controlled and, in particular slowed, manner.

The nozzle tip may comprise one or more throttle lines. In one embodiment, in which the nozzle tip comprises several throttle lines, each high-pressure fuel duct may be fluidly connected or connectable to the valve needle actuation chamber by a separate throttle line. This allows for symmetrical flow to the needle actuating surface of a valve needle.

In one embodiment, the throttling behavior of the throttle line can be adjustable and/or controllable. In such an embodiment, a control valve can be arranged on and/or in the throttle line, with which the flow rate can be adjustable.

The throttle line can comprise a flow cross-section which is between 0.025 and 0.3, preferable between 0.05 and 0.15, of the flow cross-section of the high-pressure fuel duct.

The throttle line can comprise the same flow cross-section over its entire length. Preferably, the throttle line is essentially cylindrically shaped.

In one embodiment, the throttle line can comprise different flow cross-sections, in particular different inner diameters.

The throttle line can comprise a first end connected to the high-pressure fuel duct and a second end connected to the valve needle actuation chamber.

In a preferred embodiment, the high-pressure fuel duct comprises an inner diameter of 8.5 mm and the throttle line comprises two different flow cross-sections, wherein the throttle line comprises a first cylindrical inner diameter of 0.75 mm at the first end and a second cylindrical inner diameter of 2 mm at the second end. This simplifies manufacturing. The larger 2 mm bore could also be omitted.

In one embodiment, the throttle line may be conically shaped, with the smaller flow cross-sectional opening, preferably located at the first end and the larger flow cross-section located at the second end.

The throttle line can be arranged such that the second end of the throttle line is substantially arranged at an edge of the actuation chamber.

Such a throttle line is easier to manufacture. In addition, this arrangement ensures that the needle actuation surface of a valve needle can be actuated via fuel, regardless of the installed position of the valve needle.

In one embodiment, a throttle line may be arranged such that the opening of the second end is substantially orthogonal to a central axis of the valve needle support, such that when a valve needle is installed, the opening of the second end of the throttle line is aligned parallel to the needle actuation surface of the valve needle. This enables a particularly efficient flow.

An axial distance between the valve seat and a spray hole facing end of the valve needle actuation chamber can be at least one maximum valve needle diameter, in particular at least two maximum valve needle diameters. By the term "maximum valve needle diameters", a diameter of the valve needle in the valve needle support is meant.

This allows sealing, which can be performed by the valve seat in conjunction with a valve needle, and movement of a valve needle, which can be performed in conjunction with a valve needle in the actuation chamber, to be decoupled in the nozzle tip. This can allow spatial and/or functional decoupling of sealing and movement.

According to a fourth aspect of the invention, a valve needle for a fuel injector, preferably for a fuel injector as described above with regard to the first aspect of the invention, for injecting a fuel, in particular a low flashpoint fuel such as methanol, ammonia, or LPG, into a combustion chamber of a large combustion engine is disclosed. The valve needle comprises a needle shaft, preferably a cylindrical needle shaft, a valve seat area at a first end of the valve needle, and a spring contact surface at a second end of the valve needle, for biasing, by means of a spring, the valve needle towards a closed position against a valve seat of a nozzle tip. The valve needle further comprises a needle actuation surface arranged at an axial distance from the valve seat area. The surface normal of the needle actuation surface is directed more towards the valve seat area than towards the spring contact surface. The needle actuation surface can be configured to be arranged, in a mounted state, in a valve needle actuation chamber of a nozzle tip according to the third aspect of the invention. Thus, the opening behavior of the valve needle is easier to control.

The valve needle can be guided by the needle shaft in a nozzle of a fuel injector, preferably in a valve needle support. The needle shaft can form a plain bearing with such a valve needle support, whereby the fuel can be used as a lubricant.

The valve seat area serves to form a sealing with the valve seat of a nozzle of a fuel injector. The valve seat area can be designed for a valve-closed-orifice nozzle and/or for a sac nozzle.

The spring contact surface can directly or indirectly contact a spring of a fuel injector, in particular a compression spring. A tappet may be arranged between the spring contact surface and the spring to serve as a force transmitter.

The needle actuating surface allows the valve needle to be actuated. In particular, fuel can press against the needle actuating surface, creating a force that counteracts the spring force of a spring of a fuel injector, so that the valve needle can be lifted from the valve seat and the fuel injector is movable in an open position.

As the surface normal of the needle actuating surface is directed more towards the valve seat area than towards the spring contact surface, a force caused by fuel can counteract spring force of a spring of a fuel injector.

The area of the needle actuating surface is dimensioned such that a force caused by fuel can counteract spring force of a spring of a fuel injector.

The motion behavior of the valve needle can be controlled by the size and/or shape and/or position of the needle actuating surface, and in particular in combination with a throttle line as disclosed above. In particular, a larger surface area can result in a faster opening than a smaller contact surface under otherwise identical conditions.

The axial distance between the needle actuation surface and the valve seat area can be at least one maximum valve needle diameter, in particular at least two maximum valve needle diameters. By the term "maximum valve needle diameters", a diameter of the valve needle in the valve needle support is meant.

This allows the sealing against the valve seat, which can be performed by the valve seat area, and the movement of the valve needle, which can be performed by the actuation surface, to be spatially separated and decoupled from each other.

The needle actuation surface can comprise an annular shape.

This can enable the pressure to be applied evenly to the valve needle, thereby reducing uneven wear or actuation. In addition, an annular shape is easier to manufacture.

According to a fifth aspect of the invention, a fuel injector, preferably by a fuel injector as described above with regard to the first aspect of the invention, for injecting a fuel, in particular a low flashpoint fuel such as methanol, ammonia, or LPG, into a combustion chamber of a large combustion engine is disclosed. The fuel injector comprises an injector body with a fuel supply line and a fuel supply chamber, a nozzle tip as described above with regard to the second aspect of the invention, and a valve needle biased by a spring towards a closed position against a valve seat. The valve needle is configured to open and close a fluid connection between the fuel supply chamber and the spray hole. The spring is arranged in a spring chamber.

All the advantages, technical effects and possible combinations and advantageous embodiment remain the same as discussed above and shall not be repeated here for the sake of clarity. In particular, cavitation is reduced.

According to a sixth aspect of the invention, a fuel injector, preferably by a fuel injector as described above with regard to the first or fifth aspect of the invention, for injecting a fuel, in particular a low flashpoint fuel such as methanol, ammonia, or LPG, into a combustion chamber of a large combustion engine is disclosed. The fuel injector comprises an injector body with a fuel supply line and a fuel supply chamber, a nozzle tip as described above with regard to the third aspect of the invention, and a valve needle as described above with regard to the fourth aspect of the invention. The valve needle is biased by a spring towards a closed position against a valve seat. The valve needle is configured to open and close a fluid connection between the fuel supply chamber and the spray hole. The spring is arranged in a spring chamber.

All the advantages, technical effects and possible combinations and advantageous embodiment remain the same as discussed above and shall not be repeated here for the sake of clarity. In particular, the opening behavior is easier to adjust.

According to a seventh aspect of the invention, a fuel injection system for injecting a fuel, in particular a low flashpoint fuel such as methanol, ammonia, or LPG, into a combustion chamber of a large combustion engine is disclosed. The fuel injection system comprises at least one fuel injector as described above.

The fuel injection system may comprise a fuel supply system. A fuel supply system may comprise a fuel source, such as a fuel tank and/or a pump.

The fuel injection system may further comprise a purge system for flushing out residual fuel in case of an emergency or a stop or a switchover to a different fuel and it may comprise a fuel treatment system. In such a fuel treatment system, leaked fuel may be treated for further use and/or for storing and/or venting.

The fuel injection system may further comprise control unit configured to control the injection process.

According to an eighth aspect of the invention, a large combustion engine, in particular a longitudinally scavenged two-stroke large engine is disclosed. The large combustion engine comprises at least one cylinder having a combustion chamber, wherein a piston is arranged in the cylinder for a reciprocating movement between a top dead center position and a bottom dead center position. The engine comprises at least one fuel injector as described above and/or a fuel injection system as described above.

Preferably each cylinder comprises at least one fuel injector as described above for injecting a fuel, in particular methanol, ammonia, LNG, or LPG.

Each cylinder may comprise a second fuel injector for injecting a second fuel into the combustion chamber, wherein the second fuel is different from the fuel. In particular, the second fuel is a diesel fuel for self-ignition and/or pilot ignition of the fuel in the combustion chamber.

### Brief Description of the Drawings

The invention will be better understood and objects other than those set forth above will become apparent when consideration is given to the following detailed description thereof. Such description makes reference to the annexed drawings which show:
- **FIG 1:**: Schematic representation of a large combustion engine,
- **FIG 2:**: Schematic representation of a fuel injector,
- **FIG 3:**: Schematic representation of a fuel injector,
- **FIG 4:**: Schematic representation of a nozzle tip with a throttle line,
- **FIG 5:**: Schematic representation of a nozzle tip and a valve needle,
- **FIG 6:**: Schematic representation of a nozzle tip with a non-cylindrical spray hole,
- **FIG 7:**: Detail view of the spray hole from Fig. 6.

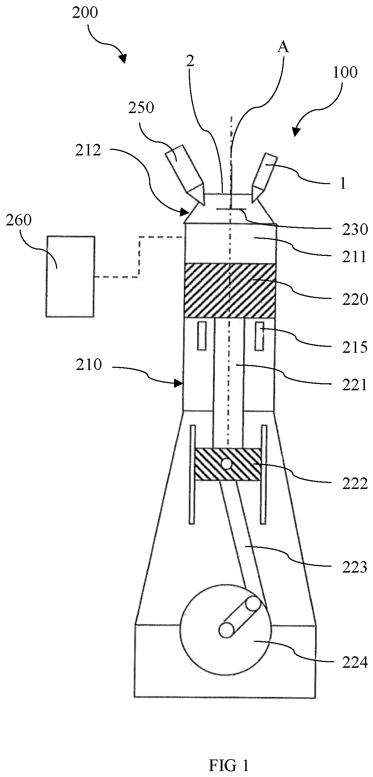

In **figure 1****,** only one of the cylinders 210 of the large engine 200 is shown. Usually, the large engine 200 comprises a plurality of cylinders 210, for example at least four and up to twelve cylinders 210 or even more. The term "large combustion engine" refers to internal combustion engines that are typically used as drive units for ships or in stationary operations, such as driving large generators for generating electrical energy. Typically, the cylinders 210 of a large engine 200 each have an inner diameter (bore) of at least about 200 mm. Large engines 200 are known in various configurations, for example as two-stroke engines or four-stroke engines.

In the following description, reference is made by way of example to a large engine 200 configured as a longitudinally scavenged two-stroke large engine having a plurality of cylinders 210. Each cylinder 210 has a combustion chamber 211. Furthermore, in each cylinder 210, a piston 220 is arranged for reciprocating movement between a top dead center and a bottom dead center.

The term "longitudinally scavenged" means that the scavenging or charging air is introduced into the cylinder 210 in the area of the lower end, and an exhaust valve 230 is arranged in or at the cylinder cover 212 located at the upper end of the cylinder 210.

In particular, reference is made to a large longitudinally scavenged two-stroke engine that can be operated with different fuels, namely with a first fuel and with a second fuel.

According to a preferred configuration, the large engine 200 can be operated with methanol or ammonia as a first fuel and with a self-igniting and liquid second fuel. For this, the large engine 200 comprises a first fuel injection system 100 and a second fuel supply system 250.

Each cylinder 210 comprises at least one, but preferably a plurality of, first fuel injector systems 100 for injecting the first fuel, as well as at least one, but preferably a plurality of, second fuel injectors 250 for injecting the second fuel.

In each cylinder 210, the piston 220 is connected in a manner known per se to a crosshead 222 via a piston rod 221. The cross-head 222 is connected to a crankshaft 224 via a push rod or connecting rod 223, so that the movement of the piston 220 is transmitted via the piston rod 221, the crosshead 222, and the connecting rod 223 to the crankshaft 224 to rotate it. The upper side of the piston 220, together with the cylinder cover 212, delimits the combustion chamber 211 into which the first fuel and/or the second fuel is introduced.

In the embodiment of a longitudinally scavenged two-stroke large diesel engine 200, scavenging air slots 215 are usually provided in the lower region of each cylinder 210 or cylinder liner. These slots are periodically closed and opened by the movement of the piston 220 in the cylinder 210, allowing the scavenging air provided by the turbocharger under charging pressure to flow into the cylinder 210 through the scavenging air slots 215 when they are open. In the cylinder cover 212, the usually centrally arranged exhaust valve 230 is provided, through which the exhaust gases can be discharged from the cylinder 210 into the exhaust system after the combustion process.

It is noted that the invention is not restricted to this specific type of a longitudinally scavenged two-stroke large engine 200, which can be operated with the first fuel and/or with the second fuel. The large engine can also be any other type of large engine. In particular, it is possible that the large engine is configured for the combustion of only one fuel.

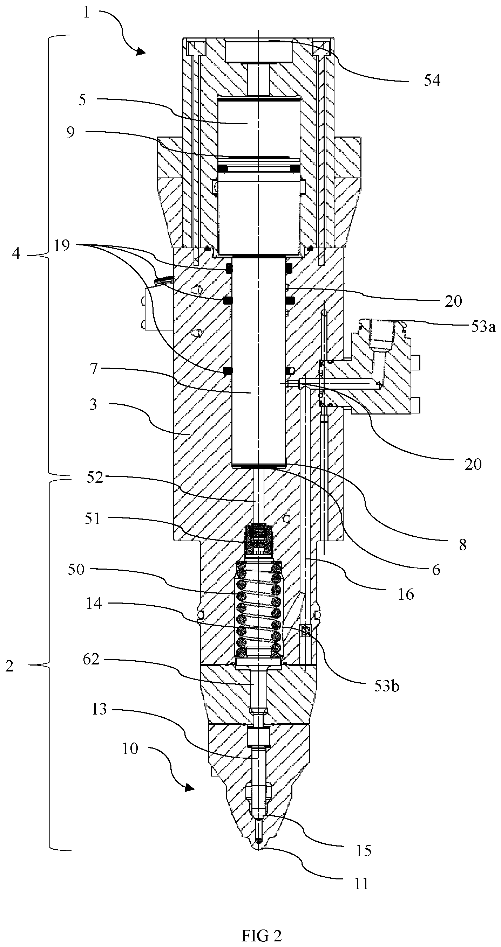

**Figure 2** shows a schematic representation of a fuel injector 1.

The fuel injector 1 comprises a nozzle 2 and a pressure amplifier 4. The fuel injector 1 comprises an injector body 3 defining an actuation chamber 5 and a fuel supply chamber 6 which is configured as a pressure chamber 6.

An actuating piston 7 is disposed within the injector body 3 and movable therein. The actuating piston 7 has a first side 9 with a first cross-sectional area facing the actuation chamber 5 and a second side 8 with a second cross-sectional area smaller than the first cross sectional area facing the pressure chamber 6. A supply of an actuating fluid, such as a hydraulic oil, to the actuation chamber 5 moves the actuating piston 7 to pressurize the fuel in the pressure chamber 6. The actuating fluid can enter the actuating chamber 5 through the actuating fluid inlet 54.

The nozzle 2 comprises a nozzle tip 10 having at least one spray hole 11, through which the fuel is injectable into a combustion chamber. The nozzle 2 further comprises at two high-pressure fuel ducts (not visible), through which the fuel can be guided from the pressure chamber 6 to the at least one spray hole 11.

A valve needle 13 is loaded with a spring 14 and interacts with a valve seat 15 for opening and closing a fluid connection between the high-pressure fuel duct and the at least one spray hole 11.

A tappet 62 is arranged between the spring 14, which is designed as a compression spring, and the valve needle 13 for force transmission.

Spring 14 is arranged in a spring chamber 50. Spring chamber 50 is connected to the pressure chamber 6 by a connection line 52.

A check valve 51 is arranged in the connection line 52 and is arranged such that a fuel flow can be established from the spring chamber 50 to the pressure chamber 6 but not back from the pressure chamber 6 into the spring chamber 50.

The fuel injector 1 further comprises a fuel supply line 16, which can be connected at a first end 53a to a fuel supply system and is connected at a second end 53b to the spring chamber 50.

Fuel can be fed from a fuel supply system through the fuel supply line 16 into the spring chamber 50. The fuel can then be fed from the spring chamber 50 through the fluid line 52 and the check valve 51 into the pressure chamber 6. The fuel can then be compressed by the actuating piston 7 as described above.

Typically, the valve needle 13 moves to an open position, allowing the fuel to be injected into a combustion chamber 211 through the at least one spray hole 11, when the pressure of the fuel in the pressure chamber 6 exceeds a threshold sufficient to overcome the biasing force of the spring 14.

At least one leakage line 20 is arranged in the injector body 3 which surrounds and is in contact with the actuating piston 7.

The leakage line 20 is fluidly connected or connectable to a low-pressure source, such that leaked fuel present in the leakage line 20 is guidable out of the injector body 3 (not shown).

High pressure fuel in the pressure chamber 6 may escape from the pressure chamber 6 in direction to the actuation chamber 5 through the narrow space between the actuating piston 7 and the injector body 3. By applying a low pressure in the leakage line 20, the leaked fuel may be removed from the fuel injector 1 and be prevented from escaping into the environment.

The fuel injector further comprises sealing rings 19, which helps to reduce the amount of leaked fuel.

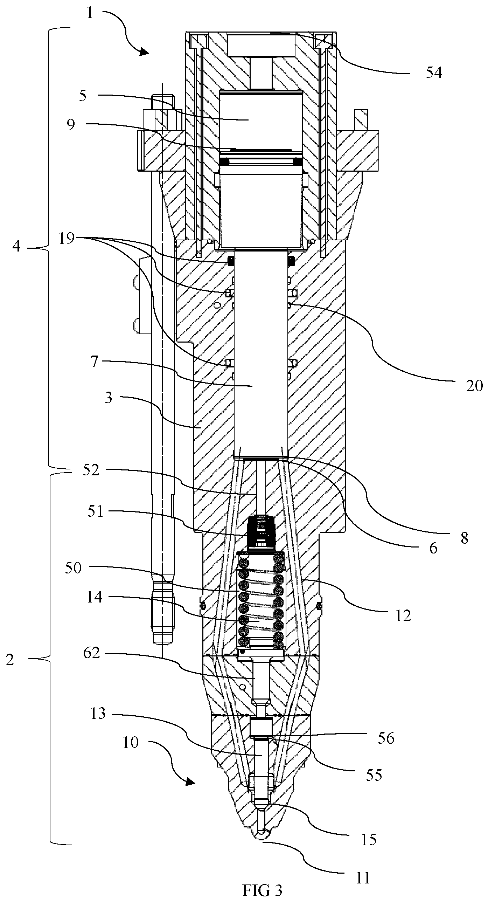

**Figure 3** shows a schematic representation of the fuel injector 1 shown in Fig. 2.

Fig. 3 shows a sectional view that differs from that in Fig. 2.

As can be seen in Fig. 3, the nozzle tip 10 comprises two high-pressure fuel ducts 12 through which fuel is guidable from the pressure chamber 6 to the spray hole 11.

The nozzle tip 10 further comprises a throttle line 55 which is fluidly connected with one high-pressure fuel duct 12.

Fuel can flow through the high-pressure fuel duct 12 and can pass through the throttle line 55. The fuel then presses against an annular needle actuation surface 56 of the valve needle 13, whereby the valve needle 13 can be lifted into an open position so that fuel can flow from the pressure chamber 6 to the at least one spray hole 11.

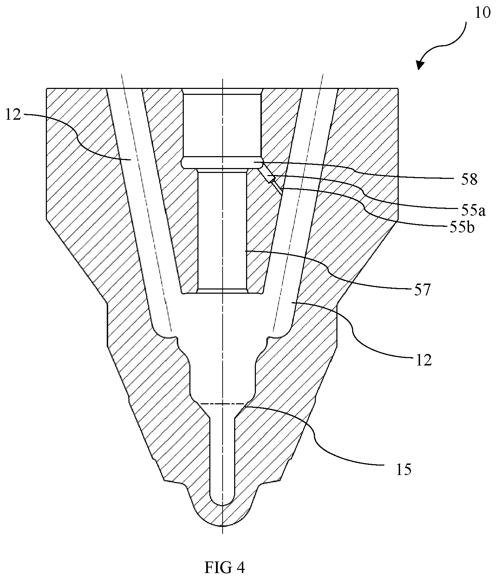

**Figure 4** shows a schematic representation of a nozzle tip 10.

The nozzle tip 10 comprises a valve needle support 57 for guiding a valve needle and a valve needle actuation chamber 58. The valve needle actuation chamber 58 is arranged in the valve needle support 57.

The nozzle tip 10 comprises a spray hole (not visible) through which a fuel is injectable into a combustion chamber of a large combustion engine. The nozzle tip 10 further comprises a valve seat 15, on which a valve needle can rest in a closed position and thereby closing the fluid connection between a fuel supply chamber and the spray hole (not visible).

The nozzle tip 10 comprises two high-pressure fuel ducts 12 through which a fuel is guidable from the fuel supply chamber to the spray hole (not visible). The nozzle tip 10 further comprises a throttle line 55 which fluidly connects the valve needle actuation chamber 58 with one high-pressure fuel duct 12.

Both high-pressure fuel ducts 12 have a diameter of 8.5 mm. The throttle line 55 comprises a first section 55a and a second section 55b, wherein the first section 55a is connected to the actuation chamber 58 and the second section 55b is connected to the high-pressure fuel duct 12. The first section 55a comprises a diameter of 2 mm and the second section 55b comprises a diameter of 0.75 mm. The first section 55a is substantially arranged at the edge of the actuation chamber 58.

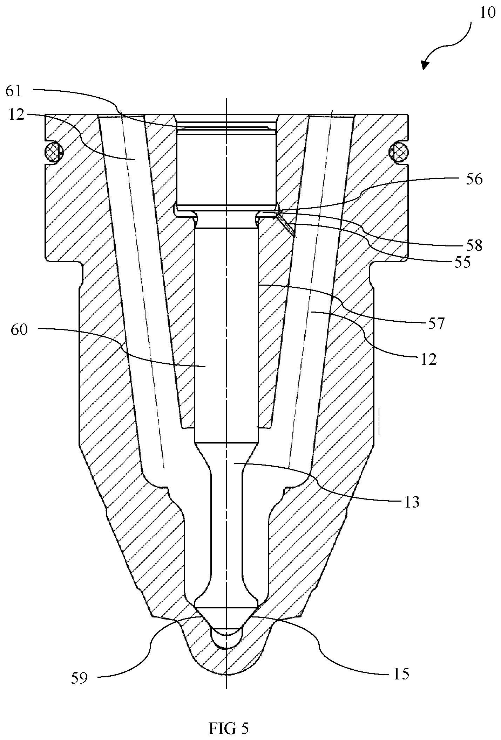

**Figure** 5 shows a schematic representation of a nozzle tip 10 for a fuel injector and a valve needle 13.

The nozzle tip 10 comprises a valve needle support 57 for guiding the valve needle 13 and a valve needle actuation chamber 58. The valve needle actuation chamber 58 is arranged in the valve needle support 57.

The nozzle tip 10 comprises a spray hole (not visible) through which a fuel is injectable into a combustion chamber of a large combustion engine. The nozzle tip 10 further comprises a valve seat 15, on which the valve needle 13 can rest in a closed position, thereby closing the fluid connection between a fuel supply chamber and the spray hole (not visible).

The nozzle tip 10 comprises two high-pressure fuel ducts 12 through which a fuel is guidable from a fuel injector to the spray hole (not visible). The nozzle tip 10 further comprises a throttle line 55 which fluidly connects the valve needle actuation chamber 58 with one high-pressure fuel duct 12.

Both high-pressure fuel ducts 12 have a diameter of 8.5 mm and the throttle line 55 has a maximum diameter of 2 mm. One end of the throttle line 55 is substantially arranged at the edge of the actuation chamber 58.

The axial distance between the valve seat 15 and a spray hole facing end of the valve needle actuation chamber 58 is more than three maximum valve needle diameters as measured in the valve needle support 57.

The valve needle 13 comprises a cylindrical needle shaft 60, a spring contact surface 61, an annular needle actuation surface 56 and a valve seat area 59. The surface normal of the annular needle actuation surface 56 is directed towards the valve seat area 59. The axial distance between the annular needle actuation surface 56 and the valve seat area 59 is more than six times a maximum valve needle diameter.

When installed, the annular needle actuation surface 56 does not rest on any surface of the valve needle actuation chamber 58 in either the open or closed valve position.

Fuel can flow through the high-pressure fuel duct 12 and can pass through the throttle line 55. The fuel then presses against the annular needle actuation surface 56. If the resulting force is greater than a spring force pressing the valve needle 13 onto the valve seat 15, the valve needle 13 is lifted so that an open fluid connection between the high-pressure fuel ducts 12 and the spray hole (not visible) is achieved or maintained.

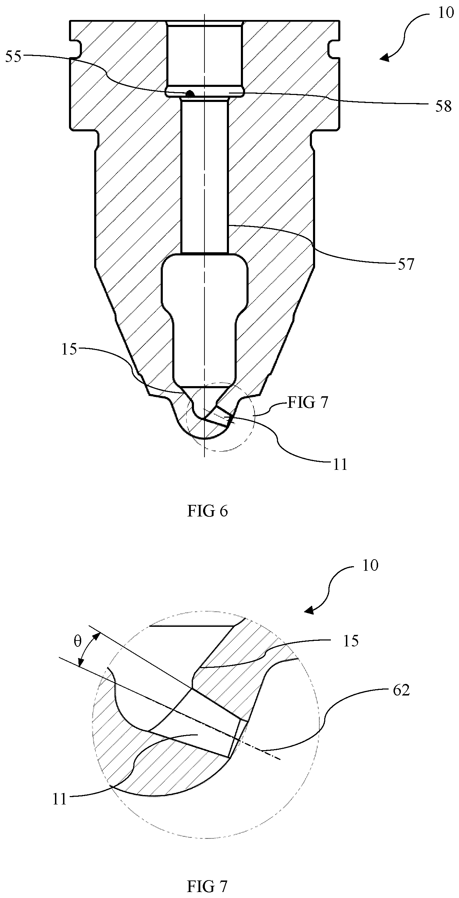

**Figure** 6 shows a schematic representation of a nozzle tip 10 for a fuel injector.

The nozzle tip 10 comprises a spray hole 11 through which a fuel is injectable into a combustion chamber of a large combustion engine. The spray hole 11 is essentially conically shaped along its axis. A detail view of the spray hole 11 is shown in Fig. 7.

The nozzle tip 10 comprises a valve needle support 57 for guiding a valve needle (not shown) and a valve needle actuation chamber 58. The valve needle actuation chamber 58 is arranged in the valve needle support 57.

The nozzle tip 10 comprises a throttle line 55 which fluidly connects the valve needle actuation chamber 58 with a high-pressure fuel duct (not visible).

The nozzle tip 10 further comprises a valve seat 15, on which a valve needle can rest, thereby closing the fluid connection between a fuel supply chamber and the spray hole 11.

**Figure** 7 shows a detail view of a spray hole 11 of the nozzle tip 10 shown in Fig. 6.

The spray hole 11 is essentially conically shaped along its axis 62. The half-angle *θ* of the conically shaped spray hole 11 **is** 7°. The transition from the valve seat 15 to the spray hole 11 is a tangential transition, which can help to reduce formation of turbulence flow and/or cavitation.

Synergetic effects may arise from different combinations of the embodiments although they might not be described in detail. While there are shown and described presently preferred embodiments of the invention, it is to be distinctly understood that the invention is not limited thereto but may be otherwise variously embodied and practiced within the scope of the following claims.

## Claims

1. A fuel injector (1) for injecting a fuel, in particular a low-flashpoint fuel such as methanol, ammonia, or LPG, into a combustion chamber (211) of a large combustion engine (200), the fuel injector (1) comprising
- an injector body (3) with a fuel supply line (16) and a fuel supply chamber (6),
- a nozzle tip (10) having a spray hole (11), through which the fuel is injectable into the combustion chamber (211), and
- a valve needle (13) biased by a spring (14) towards a closed position against a valve seat (15), the valve needle (13) being configured to open and close a fluid connection between the fuel supply chamber (6) and the spray hole (11), wherein the spring (14) is arranged in a spring chamber (50),
**characterized in that**
the fuel supply line (16) is fluidly connected or connectable to the spring chamber (50) and to the fuel supply chamber (6).

2. The fuel injector (1) of claim 1, wherein the fuel supply chamber (6) is a pressure chamber (6) configured to pressurize the fuel from a fuel supply pressure, advantageously between 5 bar and 100 bar, to a fuel injection pressure, advantageously between 300 bar and 800 bar.

3. The fuel injector (1) of any one of the preceding claims,
wherein a valve (51), preferably a non-return valve, is arranged between the spring chamber (50) and the fuel supply chamber (6), and in particular wherein the valve (51) is configured such
- that a fuel flow can be established from the spring chamber (50) to the fuel supply chamber (6), and
- that a fuel flow can be blocked from the fuel supply chamber (6) to the spring chamber (50).

4. The fuel injector (1) of any one of the preceding claims, configured such that the fuel is guidable from the fuel supply line (16) through the spring chamber (50) to the fuel supply chamber (6).

5. The fuel injector (1) of any one of the preceding claims,
wherein the spring chamber (50) is fluidly connected or connectable to the fuel supply chamber (6) by means of a connection line (52),
wherein the connection line (52) has a smaller flow cross section than a maximum flow cross section of the spring chamber (50),
and preferably wherein the connection line (52) has the same flow cross section as the fuel supply line (16) within a range of ±10%.

6. The fuel injector (1) of any one of the preceding claims, wherein the fuel supply line (16) comprises a first end (53a) and a second end (53b), wherein the first end (53a) is fluidly connectable to a fuel supply and wherein the second end (53b) is fluidly connected to the spring chamber (50).

7. A nozzle tip (10) for a fuel injector (1), preferably of any one of the preceding claims, for injecting a fuel, in particular a low flashpoint fuel such as methanol, ammonia, or LPG, into a combustion chamber (211) of a large combustion engine (200), the nozzle tip (10) comprising
- a spray hole (11) through which the fuel is injectable into the combustion chamber (211),
**characterized in that**
the spray hole (11) has along its axis a non-cylindrical shape and/or wherein at least one aperture of the spray hole (11) is non-circular.

8. The nozzle tip (10) of claim 7, wherein the spray hole (11) comprises along its axis at least one of a conical shape, a shape defined by a non-linear function, and a shape defined by a polynomial function.

9. The nozzle tip (10) of any one of the claims 7 to 8,
wherein the spray hole (11) comprises along its axis a conical shape with a half-angle *θ* between 0.5° and 20°, preferably between 3° and 10°, most preferably between 5° and 8°.

10. A nozzle tip (10), preferably of any one of the claims 7 to 9, for a fuel injector (1), preferably of any one of the claims 1 to 6, for injecting a fuel, in particular a low flashpoint fuel such as methanol, ammonia, or LPG, into a combustion chamber (211) of a large combustion engine (200), the nozzle tip (10) comprising
- a spray hole (11) through which the fuel is injectable into the combustion chamber (211),
- a high-pressure fuel duct (12) through which the fuel is guidable from the fuel injector (1) to the spray hole (11), and
- a valve needle support (57) for guiding a valve needle (13), and
- a valve seat (15),
**characterized in that**
the nozzle tip (10) further comprises a valve needle actuation chamber (58) arranged in the valve needle support (57) and fluidly connected or connectable to the high-pressure fuel duct (12).

11. The nozzle tip (10) of claim 10, wherein the valve needle actuation chamber (58) is fluidly connected or connectable to the high-pressure fuel duct (12) by means of a throttle line (55).

12. The nozzle tip (10) of claim 11, wherein the throttle line (55) comprises a flow cross section which is between 0.025 and 0.3, preferable between 0.05 and 0.15, of the flow cross section of the high-pressure fuel duct (12).

13. The nozzle tip (10) of any one of the claims 11 to 12, wherein the throttle line (55) comprises a first end connected to the high-pressure fuel duct (12) and a second end connected to the valve needle actuation chamber (58),
and wherein the throttle line (55) is arranged such that the second end of the throttle line (55) is substantially arranged at an edge of the actuation chamber (58).

14. The nozzle tip (10) of any one of the claims 10 to 13, wherein an axial distance between the valve seat (15) and a spray hole (11) facing end of the valve needle actuation chamber (58) is at least one needle diameter, in particular at least two needle diameters.

15. A valve needle (13) for a fuel injector (1), preferably of any one of the claims 1 to 6, for injecting a fuel, in particular a low flashpoint fuel such as methanol, ammonia, or LPG, into a combustion chamber (211) of a large combustion engine (200), the valve needle (13) comprising
- a needle shaft (60), preferably a cylindrical needle shaft,
- a valve seat area (59) at a first end of the valve needle (13), and
- a spring contact surface (61) at a second end of the valve needle (13), for biasing, by means of a spring (14), the valve needle (13) towards a closed position against a valve seat (15) of a nozzle tip (10),
**characterized in that**
the valve needle (13) further comprises a needle actuation surface (56) arranged at an axial distance from the valve seat area (59), and
**in that** a surface normal of the needle actuation surface (56) is directed more towards the valve seat area (59) than towards the spring contact surface (61).

16. The valve needle (13) of claim 15 wherein the axial distance between the needle actuation surface (56) and the valve seat area (59) is at least one needle diameter, in particular at least two needle diameters.

17. The valve needle (13) of any one of the claims 15 to 16, wherein the needle actuation surface (56) comprises an annular shape.

18. A fuel injector (1), preferably of any one of the claims 1 to 6, for injecting a fuel, in particular a low flashpoint fuel such as methanol, ammonia, or LPG, into a combustion chamber (211) of a large combustion engine (200), the fuel injector (1) comprising
- an injector body (3) with a fuel supply line (16) and a fuel supply chamber (6),
- a nozzle tip (10) of any one of the claims 7 to 9,
- a valve needle (13) biased by a spring (14) towards a closed position against a valve seat (15), the valve needle (13) being configured to open and close a fluid connection between the fuel supply chamber (6) and the spray hole (11), wherein the spring (14) is arranged in a spring chamber (50).

19. A fuel injector (1), preferably of any one of the claims 1 to 6 or claim 18, for injecting a fuel, in particular a low flashpoint fuel such as methanol, ammonia, or LPG, into a combustion chamber (211) of a large combustion engine (200), the fuel injector (1) comprising
- an injector body (3) with a fuel supply line (16) and a fuel supply chamber (6),
- a nozzle tip (10) of any one of the claims 10 to 14, and
- a valve needle (13) of any one of the claims 15 to 17, biased by a spring (14) towards a closed position against a valve seat (15), the valve needle (13) being configured to open and close a fluid connection between the fuel supply chamber (6) and the spray hole (11), wherein the spring (14) is arranged in a spring chamber (50).

20. A fuel injection system (100) for injecting a fuel, in particular a low flashpoint fuel such as methanol, ammonia, or LPG, into a combustion chamber (211) of a large combustion engine (200), the fuel injection system (100) comprising at least one fuel injector (1) of any one of the claims 1 to 6 or 18 to 19.

21. A large combustion engine (200), in particular a longitudinally scavenged two-stroke large engine, comprising at least one cylinder (210) having a combustion chamber (211), wherein a piston (220) is arranged in the cylinder (210) for a reciprocating movement between a top dead center position and a bottom dead center position, wherein the engine (200) comprises at least one fuel injector (1) of any one of the claims 1 to 6 or 18 - 19 and/or a fuel injection system of claim 20.
